# FASCICULE DE BREVET EUROPEEN

(11) **EP 3 278 017 B1**
(45) Date de publication et mention de la délivrance du brevet: **26.04.2023**
(21) Numéro de dépôt: 16718432.4
(22) Date de dépôt: 01.04.2016
(51) Int. Cl.: F21V 8/00, G03B 21/20, H04N 9/31

(54) **SOURCE DE LUMIÈRE MONOCHROMATIQUE A DIODES LASERS.**
LASERDIODENBASIERTE QUELLE VON MONOCHROMATISCHEM LICHT
LASER-DIODE-BASED SOURCE OF MONOCHROMATIC LIGHT

(30) Priorité: 03.04.2015 FR 1552885
(43) Date de publication de la demande: 07.02.2018
(73) Titulaire: Xyzed, 75018 Paris (FR)
(72) Inventeur: REBIFFE, Maurice, 75018 Paris (FR)
(74) Mandataire: Cabinet Beau de Loménie
(86) Numéro de dépôt international: PCT/FR2016/050753
(87) Numéro de publication internationale: WO 2016/156759

(56) Documents cités:
- JP-A- 2001 356 404
- US-A1- 2002 114 157
- US-A1- 2003 112 639
- BASU CHANDRAJIT ET AL: "Lighting with laser diodes", ADVANCED OPTICAL TECHNOLOGIES, vol. 2, no. 4, 1 August 2013 (2013-08-01), pages 313-312, XP055806281, ISSN: 2192-8576, DOI: 10.1515/aot-2013-0031

## Description

### Domaine de l'invention

La présente invention se rapporte au domaine de l'éclairage et elle concerne plus particulièrement une source de lumière laser pour projecteurs cinéma ou vidéo.

### Art antérieur

Jusqu'à récemment, les projecteurs d'éclairage étaient classiquement constitués d'une lampe à incandescence ou d'une lampe à décharge type Xénon, Mercure, HMI ou HTI, et d'un réflecteur pour orienter le faisceau lumineux issu de cette lampe vers un système optique comportant une ou plusieurs lentilles disposées les unes derrière les autres dans le faisceau lumineux. Dans les projecteurs de scène ou de spectacle, différents obturateurs sont aussi placés en sortie du système optique pour assurer la réalisation d'effets spéciaux, par exemple un couteau de découpe, une roue de couleur, un iris et une roue de gobos.

Toutefois, depuis quelques années sont apparus sur le marché de l'éclairage, notamment cinéma et vidéo numérique, des projecteurs dont les sources de lumière, destinées à remplacer ces lampes à décharge ou à incandescence, sont des LEDs ou des diodes lasers, comme dans le brevet US6,224,216. Malheureusement, ces projecteurs sont pénalisés par une taille importante des sources de lumière due essentiellement au nombre très élevé de fibres optiques utilisées pour collecter la lumière. Ce grand nombre de fibres optiques résulte en effet de la difficulté à collimater les faisceaux des diodes en un seul point de focalisation pour permettre de concentrer la lumière dans une unique fibre optique de sortie. De plus, la gestion des diodes montées en série s'effectue en nombre réduit, souvent par séries de 6 à 12 diodes (voir 24 au maximum) et ces séries de diodes sont généralement regroupées par couleur primaire (Rouge, Vert, Bleu).

En outre, chaque groupe de couleur est de faible puissance (en moyenne 4 à 5 Watts optiques) et cette puissance très inégale (le rouge par rapport au bleu par exemple), ce qui ne permet pas aisément d'obtenir une grande puissance d'éclairage dans un volume réduit, d'accès facile, et permettant un assemblage aisé pour la fabrication comme pour la maintenance.

US 2003/112639 A1 décrit une source de lumière pour projecteur d'éclairage comportant un module de diodes électro-luminescentes apte à former un conduit de lumière, et comportant en outre, dans un boîtier étanche à la lumière, un système optique constitué d'une lentille pour recevoir ledit conduit de lumière et le focaliser en entrée d'une fibre optique ou d'un faisceau de fibres optiques. US 2002/114157 A1 décrit une source de lumière pour projecteur d'éclairage comportant un module de diodes électro-luminescentes ou diodes lasers apte à former un conduit de lumière, et comportant en outre un système optique constitué d'un miroir parabolique hors axe pour recevoir ledit conduit de lumière et le focaliser, après réflexion dans une direction perpendiculaire, en entrée d'un intégrateur optique.

### Objet et définition de l'invention

La présente invention propose de s'affranchir de cette contrainte avec un projecteur d'éclairage dont la source de lumière permet de délivrer une grande puissance d'éclairage dans un volume particulièrement compact. Un but de l'invention est aussi de réaliser une source de lumière pouvant être monochromatique comme multi-couleurs.

Ces buts sont atteints par une source de lumière à diodes lasers pour projecteur d'éclairage comportant un module de diodes lasers apte à former un conduit de lumière de couleur et dimension déterminées à partir des faisceaux lumineux parallèles de chacune des diodes lasers de ce module, caractérisée en ce qu'elle comporte en outre, dans un boîtier étanche à la lumière, un système optique constitué d'un miroir parabolique hors axe pour recevoir ledit conduit de lumière et le focaliser après réflexion dans une direction perpendiculaire en entrée d'une unique fibre optique de sortie dudit boîtier.

Ainsi, en supprimant l'ensemble des fibres optiques de collimation et en renvoyant sur un unique élément de focalisation les différents faisceaux de lumière issus des diodes lasers, il devient possible de concentrer tous ces faisceaux en un seul point focal pour réaliser une source de lumière laser de forte puissance (15 W optiques voire plus) particulièrement compacte.

De préférence, ladite dimension du conduit de lumière est déterminée par le nombre de diodes lasers constituant ledit module de diodes lasers.

Avantageusement, la source de lumière à diodes lasers selon l'invention peut comporter un module de diodes lasers ayant des diodes lasers de même longueur d'onde, de sorte que ladite couleur dudit conduit de lumière est déterminée par la longueur d'onde desdites diodes lasers constituant ledit module de diodes lasers ou encore un module de diodes lasers ayant des diodes lasers de première, deuxième et troisième longueurs d'onde correspondant aux couleurs primaires rouge, verte et bleu, de sorte que ladite couleur dudit conduit de lumière est déterminée par synthèse additive desdites couleurs rouge, verte et bleu.

De préférence, lesdites diodes lasers sont regroupées par couleur sur ledit module de diodes lasers ou sont distribuées sur ledit module de diodes lasers de telle sorte que deux diodes lasers de même longueur d'onde ne soient pas l'une à côté de l'autre.

Avantageusement, ledit boîtier est parallélépipédique et comporte six faces formées par quatre parties montées à emboîtement, des première, deuxième et troisième parties formant cinq faces dudit boîtier et une quatrième partie de ce boîtier formant la sixième face étant constitué par ledit module d'éclairage à diodes lasers formant couvercle. Ladite première partie peut former à elle seule trois faces dudit boîtier et présente une forme en U avec une paroi de fond destinée à recevoir ledit système optique et sur laquelle se raccordent perpendiculairement deux parois de côté, une de ces deux parois de côté étant destinée à recevoir ladite fibre optique de sortie.

L'invention concerne également un projecteur d'éclairage monochrome, multi-couleurs ou polychrome de type RVB comportant au moins une source de lumière à diodes lasers telle que précitée.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue de dessus d'un projecteur selon l'invention montrant le cheminement des faisceaux de lumière,
- la figure 2 est une vue en perspective d'un module d'éclairage à diodes lasers du projecteur de la figure 1,
- la figure 3 est une vue en perspective éclatée du projecteur de la figure 1, et
- les figures 4A et 4B illustrent schématiquement une possible répartition des diodes lasers dans le module d'éclairage de la figure 2.

### Description détaillée d'un mode de réalisation préférentiel

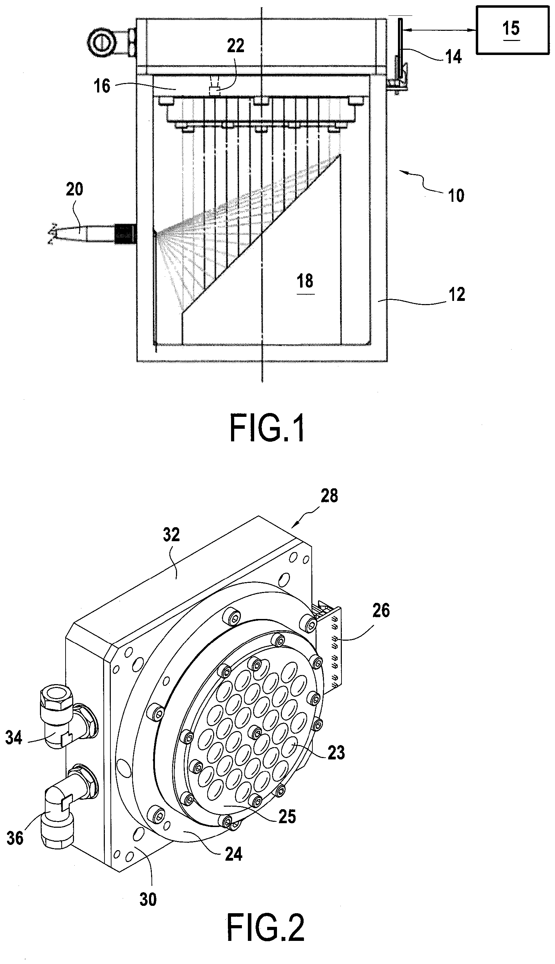

La figure 1 illustre une source de lumière à diodes lasers conforme à l'invention destinée par exemple à être montée dans un châssis d'alimentation standard de type « rack 2U, 3U ou 4U » (c'est-à-dire pouvant être monté directement dans une baie standard 19 pouces). Toutefois, compte tenu de la compacité de la source de lumière tout autre type d'intégration est aussi envisageable sous la seule réserve de respecter, selon les normes de sécurité liées à la source de lumière, les rayons de courbures de ou des fibres optiques de sortie et la connexion du système de refroidissement.

Cette source de lumière 10 comporte dans un boîtier 12 particulièrement compact et étanche à la lumière comme aux poussières, une partie électronique destinée à recevoir une carte 14 de gestion des diodes commandée par une unité externe de commande 15 et une partie optique, comprenant d'une part un module d'éclairage à diodes lasers 16 intégrant ses propres moyens de dissipation de la chaleur dégagée par les diodes lasers et destiné à générer un faisceau lumineux de grande puissance (typiquement supérieure à 10 - 15 watts optiques) et d'autre part un système optique 18 permettant la collimation et la focalisation du faisceau lumineux issu de ce module dans une unique fibre optique de sortie 20.

Comme le montre la figure 2, le module de diodes lasers 16 comporte un grand nombre de diodes lasers 22 de même longueur d'onde, réparties régulièrement en forme de matrice (32 diodes sur cette figure correspondant à des diodes vertes et typiquement de 20 à 60 dont la puissance est variable selon le type et la technologie employés) et montées sur une plaque support 24, chaque diode laser étant surmontée d'une lentille plastique ou de verre 23 de très petite taille portée par un élément de centrage 25, de façon à produire un nombre correspondant de faisceau lumineux parallèles, l'ensemble de ces faisceaux formant en quelque sorte un conduit de lumière de la couleur associée à la longueur d'onde des diodes lasers de la matrice.

La plaque support 24 incorpore des pistes conductrices (non représentées) reliées à des bornes d'alimentation en courant 26 pour connexion à la carte de gestion 14 et elle est directement en contact de moyens 28 de dissipation de la chaleur dégagée par la matrice de diodes lasers. Ces moyens de dissipation de chaleur qui sont décrits plus en détail dans la demande déposée au nom de la demanderesse et intitulée « module d'éclairage à diodes à refroidissement amélioré » comportent une plaque métallique de jonction 30 dont une face externe est en contact direct avec la plaque support et une face interne supporte une mousse métallique alvéolaire contenue dans un boîtier 32 ayant la forme d'une cuve cloisonnée, étanche à un fluide de refroidissement, avantageusement de l'eau en phase liquide ou de l'eau glycolée, et dont la plaque métallique de jonction constitue le couvercle. Ce fluide de refroidissement est respectivement véhiculé vers et depuis les modules de diodes lasers par des canalisations aller 34 et retour 36.

Revenons à la figure 1. La source de lumière à diodes lasers illustrée comporte donc dans un boîtier 12 de forme parallélépipédique à six faces, étanche à la lumière, un module de diodes lasers 16 apte à former un conduit de lumière à partir des faisceaux lumineux parallèles de chacune des diodes lasers de ce module qui délivre une couleur déterminée par la longueur d'onde des diodes lasers identiques qui le compose, les dimensions du conduit de lumière étant déterminées par la dimension de la matrice et donc le nombre de ces diodes lasers (par exemple 32 diodes vertes de longueur d'onde typiquement comprise entre 510 à 530 µm, 23 diodes rouges de longueur d'onde typiquement comprise entre 620 à 650 µm et 23 diodes bleues de longueur d'onde typiquement comprise entre 430 à 460 µm), variable selon la couleur et le niveau de technologie de chacune des couleurs considérées. Plus particulièrement, ce conduit de lumière est dirigé vers le système optique 18 constitué d'un miroir parabolique hors axe disposé en travers de ce conduit de lumière pour le réfléchir dans une direction perpendiculaire et le focaliser en un point focal déterminé PF en entrée de l'unique fibre optique de sortie 20.

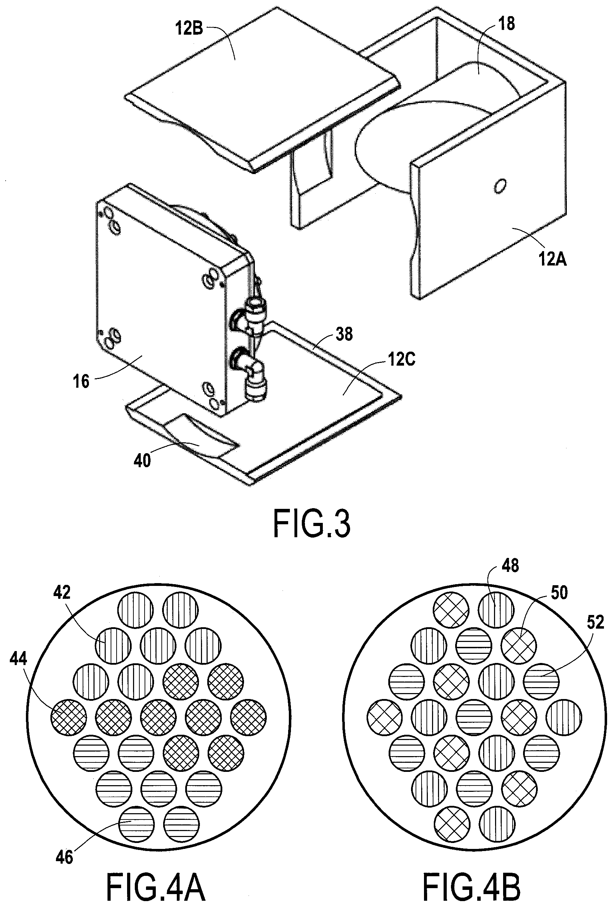

La figure 3 illustre plus spécifiquement la structure du boîtier 12 qui, pour en faciliter l'assemblage et la maintenance, est constitué de seulement quatre parties montées de préférence par emboîtement. Une première partie 12A formant à elle seule trois faces de ce boitier présente une forme en U avec une paroi de fond sur laquelle se raccordent perpendiculairement deux parois de côté, la paroi de fond étant destinée à recevoir le système optique 18 et une de ces deux parois de côté, la fibre optique de sortie 20. Des deuxième et troisième parties 12B, 12C forment chacune une face latérale du boîtier reliant entre elles et avec la paroi de fond les deux parois de côté. Enfin, une quatrième partie de ce boîtier qui n'est autre que le module d'éclairage à diodes lasers 16 vient le fermer en formant couvercle. L'assemblage est facilité par des rainures 28 et pour s'adapter à la forme circulaire de la plaque support 24 des lamages 40 sont pratiqués sur les deux parois latérales et les deux parois de côté au niveau de leurs extrémités en contact avec cette plaque.

On notera que si la source de lumière précitée permet la réalisation d'un éclairage monochromatique de forte puissance, comme celle d'éclairages multi-couleurs en associant ensemble trois éclairages monochromatiques de trois longueurs d'ondes différentes correspondant à trois couleurs primaires (par exemple Rouge, Vert et Bleu) et en choisissant un nombre adéquat de diodes lasers de façon à obtenir des sources de puissance équilibrées, il est aussi possible avec ce même système optique (le miroir hors axe évitant le dépôt d'une couche achromatique sur un train optique spécifique) de réaliser une source de lumière polychrome de type RVB sous réserve de disposer, en lieu et place des diodes lasers de même longueur d'onde du module d'éclairage monochromatique, des diodes lasers de trois longueurs d'ondes différentes correspondant à trois couleurs primaires (par exemple Rouge, Vert et Bleu) et de répartir celles-ci sur la matrice à diodes lasers selon une configuration soit regroupée par couleur comme illustrée à la figure 4A, où par exemple la référence 42 correspond à la couleur vert, la référence 44 correspond à la couleur rouge et la référence 46 correspond à la couleur bleu, soit distribuée comme illustrée à la figure 4B, de telle sorte que deux diodes lasers de même longueur d'onde ne soient pas en contact l'une de l'autre (la référence 48 correspond à la couleur vert, la référence 50 correspond à la couleur rouge et la référence 52 correspond à la couleur bleu).

La configuration distribuée, à l'image d'un écran de télévision, permet de gérer très simplement un éclairage d'une couleur quelconque (dont le blanc) alors que la configuration regroupée présente l'avantage de permettre, par un meilleur équilibrage des couleurs, d'obtenir un blanc par synthèse additive des couleurs rouge, verte et bleu. En effet, les diodes lasers rouges sont aujourd'hui de moindre puissance que les diodes lasers vertes ou bleues de sorte que la combinaison d'un nombre équivalent de diodes lasers de chaque couleur ne permet pas d'obtenir un blanc de bonne qualité (notamment pour répondre aux normes DCI). En augmentant le nombre de diodes lasers rouges on peut donc assurer un meilleur équilibrage.

Bien entendu, il est clair que selon le type des diodes lasers utilisées, ce nombre supplémentaire pourrait être d'une autre couleur que la couleur rouge, l'augmentation correspondante du nombre de diodes lasers de chacune de ces trois couleurs R, V ou B permettant d'obtenir un blanc parfait.

## Revendications

1. Source de lumière à diodes lasers pour projecteur d'éclairage comportant un module de diodes lasers (16) apte à former un conduit de lumière de couleur et dimension déterminées à partir de faisceaux lumineux parallèles de chacune des diodes lasers de ce module, et comportant en outre, dans un boitier (12) étanche à la lumière, un système optique (18) constitué d'un miroir parabolique hors axe pour recevoir ledit conduit de lumière et le focaliser, après réflexion dans une direction perpendiculaire, en entrée d'une unique fibre optique de sortie (20) dudit boitier.

2. Source de lumière à diodes lasers selon la revendication 1, **caractérisée en ce que** ladite dimension du conduit de lumière est déterminée par le nombre de diodes lasers constituant ledit module de diodes lasers.

3. Source de lumière à diodes lasers selon la revendication 1, **caractérisée en ce qu'**elle comporte un module de diodes lasers ayant des diodes lasers de même longueur d'onde, de sorte que ladite couleur dudit conduit de lumière est déterminée par la longueur d'onde desdites diodes lasers constituant ledit module de diodes lasers.

4. Source de lumière à diodes lasers selon la revendication 1, **caractérisée en ce qu'**elle comporte un module de diodes lasers ayant des diodes lasers de première, deuxième et troisième longueurs d'onde correspondant aux couleurs primaires rouge, verte et bleu, de sorte que ladite couleur dudit conduit de lumière est déterminée par synthèse additive desdites couleurs rouge, verte et bleu.

5. Source de lumière à diodes lasers selon la revendication 4, **caractérisée en ce que** lesdites diodes lasers sont regroupées par couleur sur ledit module de diodes lasers.

6. Source de lumière à diodes lasers selon la revendication 4, **caractérisée en ce que** lesdites diodes lasers sont distribuées sur ledit module de diodes lasers de telle sorte que deux diodes lasers de même longueur d'onde ne soient pas l'une à côté de l'autre.

7. Source de lumière à diodes lasers selon la revendication 1, **caractérisée en ce que** ledit boîtier est parallélépipédique et comporte six faces formées par quatre parties (12A, 12B, 12C, 16) montées à emboîtement, des première, deuxième et troisième parties formant cinq faces dudit boîtier et une quatrième partie de ce boîtier formant la sixième face étant constitué par ledit module d'éclairage à diodes formant couvercle.

8. Source de lumière à diodes lasers selon la revendication 7, **caractérisée en ce que** ladite première partie (12A) forme à elle seule trois faces dudit boîtier et présente une forme en U avec une paroi de fond destinée à recevoir ledit système optique et sur laquelle se raccordent perpendiculairement deux parois de côté, une de ces deux parois de côté étant destinée à recevoir ladite fibre optique de sortie.

9. Source de lumière à diodes lasers selon l'une quelconque des revendications 1 à 8, **caractérisée en ce que** lesdites diodes lasers sont surmontées chacune d'une lentille plastique ou de verre (23) portée par un élément de centrage (25), de façon à délivrer chacune un desdits faisceaux lumineux parallèles.

10. Projecteur d'éclairage comportant au moins une source de lumière à diodes lasers selon l'une quelconque des revendications 1 à 9.

## Patentansprüche

1. Laserdiodenbasierte Lichtquelle für Beleuchtungsprojektor, der ein Laserdiodenmodul (16) aufweist, das imstande ist, einen Lichtleiter in einer bestimmten Farbe und Größe ausgehend von parallelen Lichtstrahlenbündeln jeder der Laserdioden dieses Moduls zu bilden und ferner in einem lichtdichten Gehäuse (12) ein optisches System (18) aufweist, das aus einem Off-Axis-Parabolspiegel besteht, um den Lichtleiter zu empfangen und ihn nach Reflexion in einer senkrechte Richtung an den Eingang einer einzigen optischen Ausgangsfaser (20) des Gehäuses zu fokussieren.

2. Laserdiodenbasierte Lichtquelle nach Anspruch 1, **dadurch gekennzeichnet, dass** die Größe des Lichtleiters von der Anzahl der Laserdioden bestimmt ist, die das Laserdiodenmodul bilden.

3. Laserdiodenbasierte Lichtquelle nach Anspruch 1, **dadurch gekennzeichnet, dass** sie ein Laserdiodenmodul aufweist, das Laserdioden mit derselben Wellenlänge hat, so dass die Farbe des Lichtleiters von der Wellenlänge der Laserdioden bestimmt wird, die das Laserdiodenmodul bilden.

4. Laserdiodenbasierte Lichtquelle nach Anspruch 1, **dadurch gekennzeichnet, dass** sie ein Laserdiodenmodul aufweist, das Laserdioden mit erster, zweiter und dritten Wellenlänge aufweist, die den Primärfarben Rot, Grün und Blau entsprechen, so dass die Farbe des Lichtleiters durch additive Synthese der Farben Rot, Grün und Blau bestimmt wird.

5. Laserdiodenbasierte Lichtquelle nach Anspruch 4, **dadurch gekennzeichnet, dass** die Laserdioden auf dem Laserdiodenmodul nach Farbe gruppiert sind.

6. Laserdiodenbasierte Lichtquelle nach Anspruch 4, **dadurch gekennzeichnet, dass** die Laserdioden auf dem Laserdiodenmodul derart verteilt sind, dass zwei Laserdioden mit derselben Wellenlänge nicht nebeneinander sind.

7. Laserdiodenbasierte Lichtquelle nach Anspruch 1, **dadurch gekennzeichnet, dass** das Gehäuse parallelepipedisch ist und sechs Flächen aufweist, die von vier ineinandergreifenden Teilen (12A, 12B, 12C, 16) gebildet sind, wobei der erste, zweite und dritte Teil fünf Flächen des Gehäuses bilden und ein vierter Teil dieses Gehäuses die sechste Fläche bildet, die aus dem Diodebeleuchtungsmodul besteht, das den Deckel bildet.

8. Laserdiodenbasierte Lichtquelle nach Anspruch 7, **dadurch gekennzeichnet, dass** der erste Teil (12A) allein drei Flächen des Gehäuses bildet und eine U-Form aufweist mit einer Bodenwand, die bestimmt ist, das optische System aufzunehmen und auf der sich senkrecht zwei Seitenwände anschließen, wobei eine dieser zwei Seitenwände bestimmt ist, die optische Ausgangsfaser aufzunehmen.

9. Laserdiodenbasierte Lichtquelle nach einem der Ansprüche 1 bis 8, **dadurch gekennzeichnet, dass** sich über jeder Laserdiode eine Linse aus Kunststoff oder Glas (23) befindet, die von einem Zentrierelement (25) getragen wird, so dass jede einen der parallelen Lichtstrahlen bereitstellt.

10. Beleuchtungsprojektor, der mindestens eine laserdiodenbasierte Lichtquelle nach einem der Ansprüche 1 bis 9 aufweist.

## Claims

1. Laser diode light source for a light projector comprising a laser diode module (16) suitable for forming a light bundle of color and dimensions that are determined from parallel light beams from each of the laser diodes in the module, and further comprising, in a light-tight box (12), an optical system (18) constituted by an off-axis parabolic mirror for receiving said light bundle and for focusing it, after reflecting it in a perpendicular direction, onto the inlet of a unique outlet optical fiber (20) of said box.

2. Laser diode light source according to claim 1, **characterized in that** said dimensions of the light bundle are determined by the number of laser diodes constituting said laser diode module.

3. Laser diode light source according to claim 1, **characterized in that** it comprises a laser diode module having laser diodes of the same wavelength, such that said color of said light bundle is determined by the wavelength of said laser diodes constituting said laser diode module.

4. Laser diode light source according to claim 1, **characterized in that** it comprises a laser diode module with laser diodes of first, second, and third wavelengths corresponding to the primary colors red, green, and blue, such that said color of said light bundle is determined by additive synthesis of said red, green, and blue colors.

5. Laser diode light source according to claim 4, **characterized in that** said laser diodes are grouped together by color in said laser diode module.

6. Laser diode light source according to claim 4, **characterized in that** said laser diodes are distributed in said laser diode module in such a manner that no two laser diodes of the same wavelength are beside each other.

7. Laser diode light source according to claim 1, **characterized in that** said box is a rectangular parallelepiped having six faces constituted by four portions (12A, 12B, 12C, 16) mounted by mutual engagement, the first, second, and third portions forming five faces of said box and the sixth portion of the box forming the sixth face and being constituted by said diode light module, which forms a lid.

8. Laser diode light source according to claim 7, **characterized in that** said first portion (12A) itself forms three faces of said box and presents a U-shape, with an end wall that is to receive said optical system and having two side walls connected perpendicularly thereto, one of the two side walls being for receiving said outlet optical fiber.

9. Laser diode light source according to any one of claims 1 to 8, **characterized in that** each of said laser diodes is surmounted by a plastics or glass lens (23) carried by a centering element (25), so as to deliver each of said parallel light beams.

10. Light projector including at least one laser diode light source according to any one of claims 1 to 9.
